# FASCICULE DE BREVET EUROPEEN

(11) **EP 1 899 593 B1**
(45) Date de publication et mention de la délivrance du brevet: **08.04.2009**
(21) Numéro de dépôt: 06778595.6
(22) Date de dépôt: 15.06.2006
(51) Int. Cl.: F02C 7/047, F02C 7/28, B64D 15/04

(54) **Système pour le dégivrage du bord d'attaque d'un capot d'entrée d'air pour turbomoteur**
Enteisungssystem für die Anströmkante einer Einlasshaube eines Turbinentriebwerks
System for defrosting the leading edge of the inlet fairing of a turboengine

(30) Priorité: 21.06.2005 FR 0506264
(43) Date de publication de la demande: 19.03.2008
(73) Titulaire: AIRBUS France, 31060 Toulouse (FR)
(72) Inventeur: PORTE, Alain, 31770 Colomiers (FR)
(74) Mandataire: Bonnetat, Christian
(86) Numéro de dépôt international: PCT/FR2006/001350
(87) Numéro de publication internationale: WO 2006/136680

(56) Documents cités:
- EP-A- 1 251 257
- EP-A- 1 318 283
- GB-A- 850 691
- US-A- 4 603 824

## Description

La présente invention concerne le dégivrage des capots d'entrée d'air de turbomoteurs, notamment pour aéronefs.

On sait que, en cas de besoin (prévention contre la formation de givre ou élimination de givre déjà formé), le bord d'attaque du capot d'entrée d'air de tels turbomoteurs est dégivré par réchauffement par de ,1'air chaud sous pression, prélevé sur ledit turbomoteur et amené audit bord d'attaque par un circuit de circulation d'air chaud. Cet air chaud sous pression, prélevé sur le moteur, est à une température élevée, par exemple de l'ordre de 500°C, de sorte que ladite conduite rayonne de la chaleur et que les structures environnantes dudit capot d'entrée d'air, sensibles à la chaleur (par exemple les panneaux acoustiques en matériau composite), doivent être protégées contre la chaleur. De plus, pour des raisons de sécurité évidentes, il est également nécessaire de prévoir une protection desdites structures environnantes, dans le cas de fuites d'air chaud sous pression ou de rupture de ladite conduite.

A cet effet, par le document EP-1 251 257, on connaît un capot d'entrée d'air pour turbomoteur, notamment pour aéronef, ledit capot d'entrée d'air étant pourvu de moyens de dégivrage de son bord d'attaque et comportant à cet effet :
- un bord d'attaque creux délimitant une chambre annulaire, fermée par une première cloison interne ;
- une conduite d'alimentation en air chaud sous pression, apte à être raccordée, à son extrémité arrière opposée audit bord d'attaque, à un circuit d'air chaud sous pression et, à son extrémité avant vers ledit bord d'attaque, à un injecteur injectant ledit air chaud sous pression dans ladite chambre annulaire, ladite conduite d'alimentation étant au moins en partie disposée dans un caisson délimité, à l'avant, par ladite première cloison interne et, à l'arrière, par une seconde cloison interne ; et
- une enveloppe de protection interne disposée dans ledit caisson et délimitant un volume d'isolation enfermant ladite conduite d'alimentation.

Ainsi, dans ce capot d'entrée d'air connu, ladite conduite est isolée du reste de l'intérieur du capot d'entrée d'air et ladite enveloppe interne de protection, continue et intégrale, permet de protéger les structures environnantes contre les radiations thermiques et les fuites d'air chaud sous pression, ainsi que contre les effets d'une rupture de ladite conduite. Grâce à des ouvertures d'introduction et d'extraction d'air, on obtient, en fonctionnement normal, une ventilation permanente interne du volume d'isolation, ce qui limite la radiation thermique de la conduite d'alimentation, les structures environnantes sensibles à la chaleur se trouvant ainsi protégées de toute détérioration ou vieillissement, liés à l'exposition à des températures élevées. En cas de fuites, de rupture ou d'explosion de la conduite, l'air chaud est évacué à l'extérieur à travers l'ouverture d'extraction, de sorte que, là encore, lesdites structures environnantes sont protégées contre l'air chaud sous pression.

Ce capot d'entrée d'air connu remplit donc parfaitement ses fonctions de protection thermique desdites structures environnantes. Cependant, dans la pratique, afin d'éviter que la dilatation longitudinale de ladite conduite d'alimentation et de ladite enveloppe de protection (généralement réalisées en acier) sous l'effet de la température imposent des contraintes auxdites première et seconde cloisons, on est amené à réaliser chacun des deux éléments que sont ladite conduite d'alimentation et ladite enveloppe de protection en deux parties emboîtées l'une dans l'autre et aptes à coulisser l'une par rapport à l'autre, de façon étanche.

Ainsi, l'augmentation thermique de longueur de ladite conduite et de ladite enveloppe est absorbée par le coulissement rentrant desdites deux parties constituant ces éléments.

On doit cependant remarquer que l'air chaud circulant dans ladite conduite d'alimentation est sous une pression élevée, par exemple de l'ordre de 10 à 20 bars, de sorte que cette pression interne a pour effet d'écarter l'une de l'autre, en fonctionnement normal, les deux parties de ladite conduite d'alimentation et, en cas de rupture de cette dernière, les deux parties de ladite conduite d'alimentation et les deux parties de l'enveloppe de protection. Il en résulte donc des contraintes appliquées auxdites cloisons par les deux parties de ladite conduite d'alimentation et/ou de ladite enveloppe de protection, lesdites contraintes tendant à déformer lesdites cloisons en les bombant vers l'extérieur du caisson. Il devient alors nécessaire de prévoir des renforts, lourds et onéreux, aptes à contrer de tels bombements.

La présente invention a pour objet un système de dégivrage permettant d'éviter les déformations des cloisons, sans pour autant utiliser des renforts desdites cloisons.

A cette fin, selon l'invention, le système pour le dégivrage du bord d'attaque d'un capot d'entrée d'air pour turbomoteur, notamment pour aéronef, ledit bord d'attaque étant creux et délimitant une chambre annulaire fermée par une première cloison interne et ledit système de dégivrage comportant :
- une conduite d'alimentation en air chaud sous pression, apte à être raccordée, à son extrémité arrière opposée audit bord d'attaque, à un circuit d'air chaud sous pression et, à son extrémité avant vers le bord d'attaque, à un injecteur injectant ledit air chaud sous pression dans ladite chambre annulaire du bord d'attaque, ladite conduite d'alimentation traversant un caisson dudit capot d'entrée d'air délimité, à l'avant, par ladite première cloison interne et, à l'arrière, par une seconde cloison interne ; et
- une enveloppe de protection interne disposée dans ledit caisson et délimitant un volume d'isolation enfermant ladite conduite d'alimentation,
est remarquable en ce que :
- ladite conduite d'alimentation et ladite enveloppe de protection sont longitudinalement rigides ;
- d'un côté, ladite conduite d'alimentation et ladite enveloppe de protection sont rigidement fixées à l'une desdites cloisons ; et
- de l'autre côté :
   ■ ladite enveloppe de protection est apte à coulisser par rapport à un palier de coulissement prévu dans l'autre cloison ; et
   ■ ladite conduite d'alimentation est reliée à ladite enveloppe de protection par une paroi élastique obturant ledit volume d'isolation et permettant des mouvements longitudinaux relatifs entre ladite conduite d'alimentation et ladite enveloppe de protection.

Ainsi, non seulement ladite conduite d'alimentation résiste par elle-même à la pression de l'air chaud, mais encore ladite enveloppe de protection peut coulisser par rapport à l'une desdites cloisons et ladite conduite d'alimentation peut coulisser par rapport à ladite enveloppe de protection. Il en résulte donc qu'aucune force de déformation ne peut être appliquée contre lesdites cloisons par la conduite d'alimentation et/ou l'enveloppe de protection.

Ledit palier de coulissement peut être agencé soit dans ladite première cloison interne, soit dans ladite seconde cloison interne.

Dans un mode de réalisation particulièrement simple, ladite paroi élastique est formée par une rondelle disposée de façon au moins approximativement orthogonale par rapport à ladite conduite d'alimentation et à ladite enveloppe de protection. Pour augmenter son élasticité longitudinale, ladite rondelle peut comporter des ondulations concentriques. Avantageusement, ladite rondelle élastique est constituée par un acier à ressort ou analogue et elle est soudée sur ladite conduite d'alimentation et sur ladite enveloppe de protection (toutes les deux constituées de façon connue de tôle d'acier), respectivement le long de ses périphéries interne et externe.

La rondelle élastique peut être disposée à l'emplacement d'un rétrécissement de la conduite d'alimentation, ce qui permet d'augmenter sa largeur. Dans ce cas, il est avantageux de prévoir une surface conique de guidage de l'air chaud, en amont de ladite rondelle élastique, pour faire converger ledit air chaud sous pression vers ledit rétrécissement de ladite conduite d'alimentation.

L'extrémité arrière de l'enveloppe de protection peut être reliée au circuit d'air chaud par des brides coopérantes et, alors, ladite rondelle élastique et ledit rétrécissement se trouvent avantageusement au niveau de la bride solidaire de l'extrémité arrière de ladite enveloppe de protection. De plus, ladite surface conique de guidage peut être portée par la bride solidaire dudit circuit d'air chaud.

Par ailleurs, il est avantageux, pour des raisons de montage et de maintenance, que ledit palier de coulissement permette un mouvement de nutation limité pour ladite enveloppe de protection.

Les figures du dessin annexé feront bien comprendre comment l'invention peut être réalisée. Sur ces figures, des références identiques désignent des éléments semblables.
La figure 1 montre, en coupe axiale, le bord d'attaque d'un capot d'entrée d'air connu.
La figure 2 illustre schématiquement le bord d'attaque connu de la figure 1 et en présente l'inconvénient auquel la présente invention remédie.
Les figures 3A, 3B et 3C illustrent schématiquement, à la manière de la figure 2, trois positions différentes du système de dégivrage du bord d'attaque conforme à la présente invention.
La figure 4 montre, en vue schématique partielle, un exemple de réalisation pratique du système de dégivrage des figures 3A, 3B et 3C.
La figure 5 montre, à plus grande échelle, un détail de la figure 4.
La figure 6 illustre une variante de réalisation du système de dégivrage des figures 3A, 3B, 3C.

Le bord d'attaque 1 du capot 2 entourant l'entrée d'air 3 d'un turbomoteur d'aéronef (non autrement représenté) est pourvu de moyens de dégivrage connus qui comportent :
- une chambre périphérique interne 4, ménagée dans le bord d'attaque creux 1 et fermée par une cloison avant interne 5, de forme annulaire, ancrée du côté de l'extrados 2E et du côté de-l'intrados 2I du capot 2 ;
- une conduite 6 d'alimentation en air chaud sous pression, apte à être raccordée, à son extrémité arrière 6R opposée audit bord d'attaque 1, à un circuit d'air chaud sous pression 7 provenant du générateur de flux chaud du turbomoteur (non représenté) et, à son extrémité avant 6A, à un injecteur 8 injectant ledit air chaud sous pression dans ladite chambre interne 4 du bord d'attaque 1 ; et
- une enveloppe tubulaire de protection 9 entourant ladite conduite d'alimentation 6.

La conduite d'alimentation 6 et l'enveloppe de protection 9 traversent un caisson 10 délimité, à l'avant, par ladite cloison avant interne 5 et, à l'arrière, par une cloison arrière interne 11, de forme annulaire, ancréé du côté de l'extrados 2E et du côté de l'intrados 2I et traversée par ladite extrémité arrière 6R de la conduite 6. Ainsi, ladite enveloppe de protection 9 délimite, en coopération avec les cloisons avant 5 et arrière 11, un volume d'isolation 12.

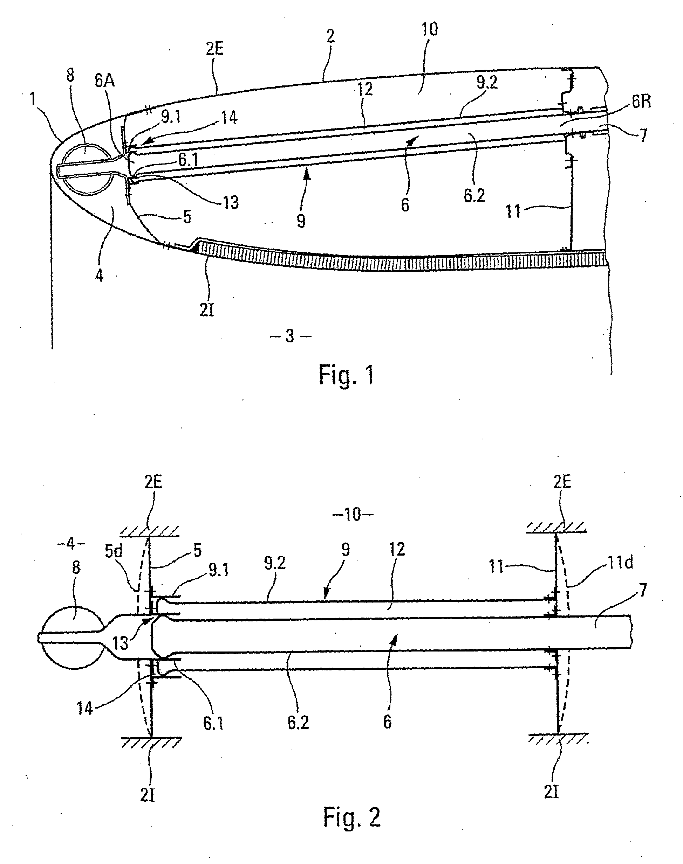

Dans ce mode de réalisation connu des figures 1 et 2, aussi bien la conduite d'alimentation 6 que l'enveloppe de protection 9 sont constituées en réalité de deux parties, respectivement 6.1, 6.2 et 9.1, 9.2. Les deux parties 6.1, 6.2 de ladite conduite d'alimentation 6 sont montées de façon télescopique l'une par rapport à l'autre et sont reliées de façon étanche par un joint glissant ou un soufflet 13. De même, les deux parties 9.1 et 9.2 de l'enveloppe de protection 9 sont montées de façon télescopique et sont reliées de façon étanche par un joint glissant ou un soufflet 14.

Par ailleurs, les parties 6.1 et 9.1 sont rigidement fixées à la cloison avant 5, alors que les parties 6.2 et 9.2 sont rigidement fixées à la cloison arrière 11.

On comprendra aisément que, du fait de la réalisation de la conduite d'alimentation 6 et de l'enveloppe de protection 9 en deux parties télescopiques 6.1, 6.2 et 9.1, 9.2, on élimine la pression exercée, sur lesdites cloisons 5 et 11, par la dilatation thermique de la conduite d'alimentation 6 et de l'enveloppe de protection 9 sous l'effet de l'air chaud traversant la conduite d'alimentation 6.

Toutefois, l'air chaud traversant ladite conduite d'alimentation 6 étant sous pression élevée, cette pression exerce une action d'écartement des deux parties 6.1 et 6.2 de la conduite d'alimentation 6 et, par conséquence, des deux parties 9.1 et 9.2 de l'enveloppe de protection 9.

Il en résulte que la conduite d'alimentation 6 agit à la manière d'un vérin sur les cloisons 5 et 11, qui se bombent vers l'extérieur du caisson 10, comme cela est représenté schématiquement par les lignes pointillées 5d et 11 d sur la figure 2. Bien entendu, en cas de rupture accidentelle de la conduite d'alimentation 6, l'air chaud se répand dans le volume d'isolation 12, de sorte que l'action d'écartement exercée par ledit air chaud sur les cloisons 5 et 11 est encore augmentée par le vérin de plus grand diamètre que constitue alors l'enveloppe de protection 9. Il est donc nécessaire de prévoir des renforts (par exemple des bielles non représentées) appliqués auxdites cloisons 5 et 11 pour en éviter le bombement non seulement en fonctionnement, mais encore en cas de rupture de la conduite d'alimentation 6, ce qui augmente le coût et la masse de l'aéronef.

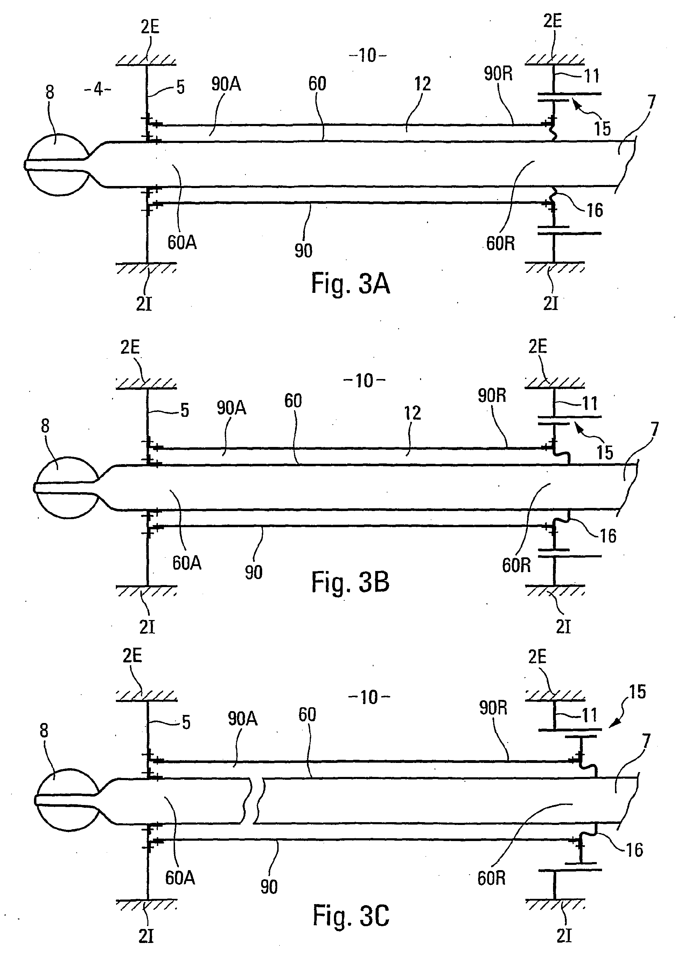

Sur les figures 3A, 3B et 3C, on a représenté schématiquement un système de dégivrage selon l'invention permettant de remédier à ces inconvénients. Par rapport au mode de réalisation connu des figures 1 et 2, dans le système de dégivrage des figures 3A, 3B et 3C :
- la cloison avant 5 reste inchangée ;
- la conduite d'alimentation 6 (en deux parties 6.1 et 6.2 reliées de façon étanche) est remplacée par la conduite d'alimentation 60 d'une seule pièce, longitudinalement rigide ;
- l'enveloppe de protection 9 (en deux parties 9.1 et 9.2 reliées de façon étanche) est remplacée par l'enveloppe de protection 90 d'une seule pièce, longitudinalement rigide ;
- la cloison arrière 11 est pourvue d'un palier de coulissement 15, par rapport auquel la partie arrière 90R de l'enveloppe de protection 90 peut coulisser ; et
- une paroi élastique 16 relie la partie arrière 60R de la conduite d'alimentation 60 à la partie arrière 90R de l'enveloppe de protection 90, en obturant le volume d'isolation 12 et en permettant des mouvements longitudinaux relatifs entre lesdites parties arrière 60R et 90R.

De plus, la partie avant 60A de la conduite d'alimentation 60 et la partie avant 90A de l'enveloppe de protection 90 sont rigidement fixées à la cloison avant 5.

La figure 3A représente par exemple l'état du système de dégivrage selon l'invention au repos, sans circulation d'air chaud sous pression dans la conduite d'alimentation 60 en direction de l'injecteur 8. Si, à partir de l'état de la figure 3A, on admet de l'air chaud sous pression dans ladite conduite d'alimentation 60, celle-ci a tendance à s'allonger sous l'action combinée de la température (dilatation longitudinale) et de la pression interne (étirement). Dans un premier temps, l'enveloppe de protection 90 reste froide, et donc de longueur fixe, de sorte que l'allongement de la conduite d'alimentation 60 est permis et contenu par la déformation longitudinale de la paroi élastique 16, comme cela est illustré par la figure 3B.

Ensuite, la température de l'enveloppe de protection 90 augmentant sous l'effet de la radiation thermique de la conduite d'alimentation 60, cette enveloppe de protection 90 se dilate longitudinalement, de sorte que sa partie arrière 90R se déplace par rapport au palier de coulissement 15, en réduisant la déformation longitudinale de la paroi élastique 16.

Si maintenant, comme cela est représenté sur la figure 3C, la conduite d'alimentation 60 se rompt, l'air chaud sous pression se répand dans l'enveloppe de protection 90, qui est alors soumise à la température et à la pression dudit air chaud. L'enveloppe de protection 90 s'allonge donc en conséquence sous l'action combinée de la température et de la pression et sa partie arrière 90R se déplace par rapport au palier 15, l'expansion longitudinale de la conduite d'alimentation 60 rompue (voir la figure 3C) étant contenue par ladite paroi élastique 16 reliant ladite conduite d'alimentation 60 à ladite enveloppe de protection 90.

De ce qui précède, on constate donc que, dans tous les cas, l'expansion longitudinale de la conduite 60 est contrôlée et contenue par l'enveloppe de protection 90 et par la paroi élastique 16, sans application d'efforts sur les cloisons 5 et 11 du fait du palier de coulissement 15, ladite paroi élastique 16 absorbant les différences d'allongement entre la conduite d'alimentation 60 et l'enveloppe de protection 90.

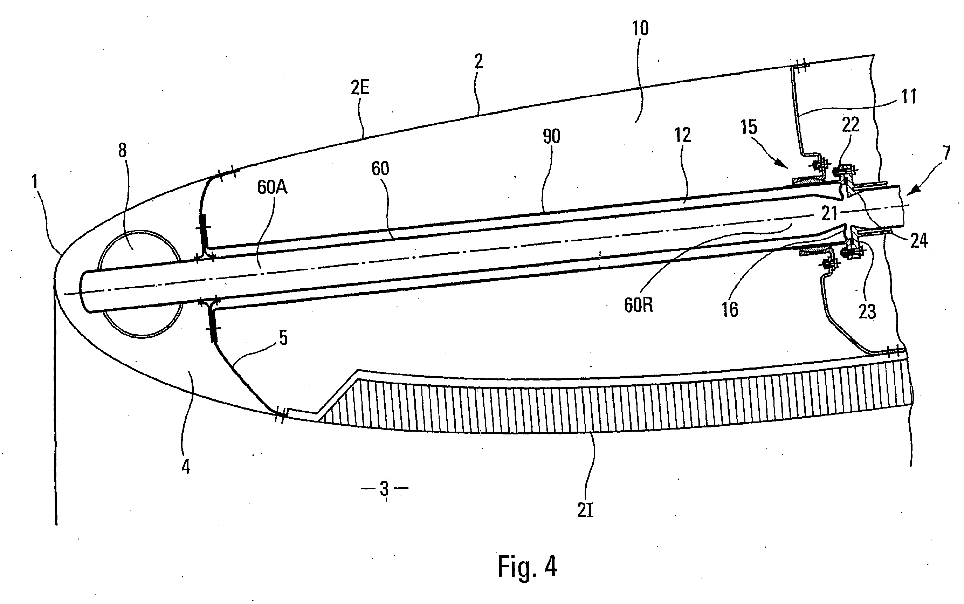

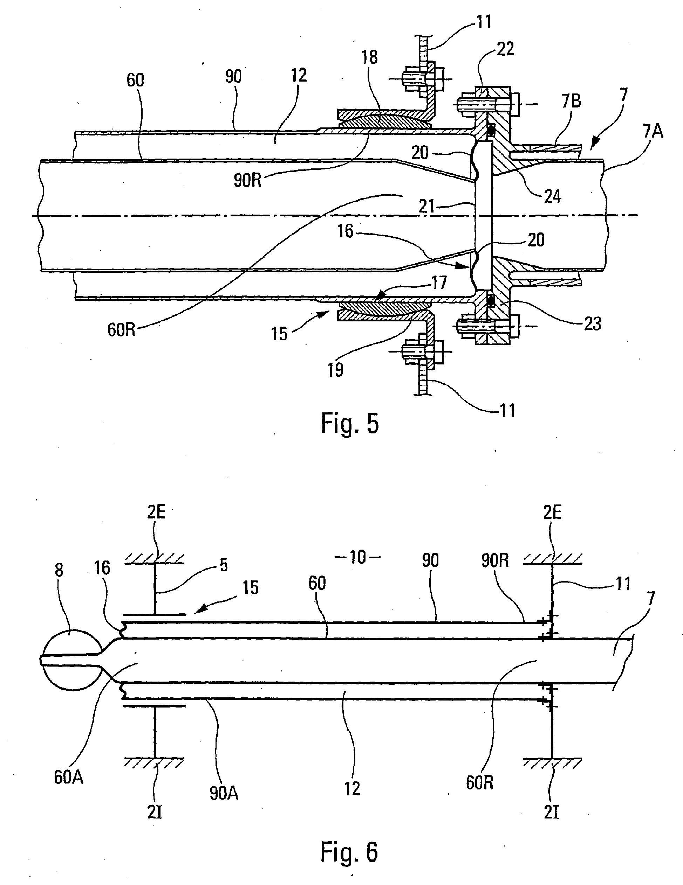

Sur la figure 4, on a représenté un exemple de réalisation pratique du système de dégivrage représenté schématiquement sur les figures 3A, 3B et 3C, la figure 5 montrant à plus grande échelle les parties arrière 60R et 90R de la conduite d'alimentation 60 et de l'enveloppe de protection 90.

Dans cet exemple de réalisation :
- la partie arrière 90R de l'enveloppe de protection 90 est directement montée à coulissement dans la surface cylindrique 17 du palier 15 et la surface cylindrique 17 peut être pratiquée dans une sphère 18 permettant de plus à l'enveloppe de protection 90 des mouvements de nutation d'amplitude limitée par rapport à la monture 19 dudit palier 15, portant la sphère 18 ;
- la paroi élastique 16 est formée par une rondelle, de préférence en acier à ressort ou analogue, disposée de façon au moins approximativement orthogonale à la conduite d'alimentation 60 et à l'enveloppe de protection 90, ladite rondelle comportant des ondulations concentriques 20 et étant soudée (par exemple par soudage TIG) par ses périphéries interne et externe, respectivement sur les parties arrière 60R et 90R ;
- ladite rondelle élastique est disposée à l'emplacement d'un rétrécissement 21 de la partie arrière 60R de la conduite d'alimentation 60, permettant d'agrandir localement la section du volume d'isolation 12 et, donc, la largeur de ladite rondelle élastique ;
- la jonction entre le système de dégivrage et le circuit d'air chaud sous pression 7 (comportant dans cet exemple une conduite centrale 7A entourée par une enveloppe de protection 7B) est réalisée au moyen de brides 22, 23, respectivement solidaires de la partie arrière 90R de l'enveloppe de protection 90 et du circuit 7 ;
- la rondelle élastique formant la paroi 1 6 est disposée au niveau de la bride 22 solidaire de la partie arrière 90R de l'enveloppe de protection 90 ; et
- la bride 23, solidaire du circuit 7, comporte une surface conique de guidage 24 pour faire converger l'air chaud sous pression véhiculé par ce dernier vers le rétrécissement 21 de la conduite d'alimentation 60 et, par là même, protéger la rondelle élastique 16 du flux d'air chaud sous pression incident.

Bien que, sur les figures 3A, 3B, 3C et 4, on ait représenté la cloison avant 5 comme fixe et la cloison arrière 11 comme pourvue du palier 15, apte à permettre le coulissement longitudinal de la partie arrière 90R de l'enveloppe de protection 90, on comprendra aisément, à l'aide de ce qui précède et de la figure 6, que le palier 15 pourrait être agencé dans la paroi avant 5, la paroi arrière 11 étant fixe. Dans ce cas, la partie avant 90A de l'enveloppe 90 coulisse dans le palier 15 et la paroi élastique 16 relie les parties avant 60A et 90A, de la conduite d'alimentation 60 et de l'enveloppe de protection 90, alors que les parties arrière 60R et 90R de ces dernières sont rigidement fixées à la cloison arrière 11.

## Revendications

1. Système pour le dégivrage du bord d'attaque (1) d'un capot d'entrée d'air (2) pour turbomoteur, notamment pour aéronef, ledit bord d'attaque (1) étant creux et délimitant une chambre annulaire (4) fermée par une première cloison interne (5) et ledit système de dégivrage comportant :
- une conduite (60) d'alimentation en air chaud sous pression, apte à être raccordée, à son extrémité arrière (60R) opposée audit bord d'attaque (1), à un circuit (7) d'air chaud sous pression et, à son extrémité avant (60A) vers le bord d'attaque (1), à un injecteur (8) injectant ledit air chaud sous pression dans ladite chambre annulaire (4) du bord d'attaque, ladite conduite d'alimentation traversant un caisson (10) dudit capot d'entrée d'air (2) délimité, à l'avant, par ladite première cloison interne (5) et, à l'arrière, par une seconde cloison interne (11) ; et
- une enveloppe de protection interne (90) disposée dans ledit caisson (10) et délimitant un volume d'isolation (12) enfermant ladite conduite d'alimentation,
**caractérisé en ce que** :
- ladite conduite d'alimentation (60) et ladite enveloppe de protection (90) sont longitudinalement rigides ;
- d'un côté, ladite conduite d'alimentation (60) et ladite enveloppe de protection (90) sont rigidement fixées à l'une desdites cloisons ; et
- de l'autre côté :
■ ladite enveloppe de protection (90) est apte à coulisser par rapport à un palier de coulissement (15) prévu dans l'autre cloison ; et
■ ladite conduite d'alimentation (60) est reliée à ladite enveloppe de protection (90) par une paroi élastique (16) obturant ledit volume d'isolation (12) et permettant des mouvements longitudinaux relatifs entre ladite conduite d'alimentation (60) et ladite enveloppe de protection (90).

2. Système de dégivrage selon la revendication 1,
**caractérisé en ce que** ledit palier de coulissement (15) est agencé dans ladite première cloison interne (5).

3. Système de dégivrage selon la revendication 1,
**caractérisé en ce que** ledit palier de coulissement (15) est agencé dans ladite seconde cloison interne (11).

4. Système de dégivrage selon l'une des revendications 1 à 3,
**caractérisé en ce que** ladite paroi élastique (16) est formée par une rondelle disposée de façon au moins approximativement orthogonale par rapport à ladite conduite d'alimentation (60) et à ladite enveloppe de protection (90).

5. Système de dégivrage selon la revendication 4,
**caractérisé en ce que** ladite rondelle comporte des ondulations concentriques (20).

6. Système de dégivrage selon-l'une des revendications 4 ou 5,
**caractérisé en ce que** ladite rondelle élastique est constituée en un acier à ressort et est soudée sur ladite conduite d'alimentation (60) et sur ladite enveloppe de protection (90), respectivement le long de ses périphéries interne et externe.

7. Système de dégivrage selon l'une des revendications 4 à 6,
**caractérisé en ce que** ladite rondelle élastique est disposée à l'emplacement d'un rétrécissement (21) de ladite conduite d'alimentation (60).

8. Système de dégivrage selon la revendication 7,
**caractérisé en ce qu'**il est prévu une surface conique de guidage (24) en amont de ladite rondelle élastique, pour faire converger ledit air chaud sous pression vers ledit rétrécissement (21) de ladite conduite d'alimentation (60).

9. Système de dégivrage selon la revendication 3 et l'une des revendications 7 ou 8,
**caractérisé en ce que**:
- l'extrémité arrière (90R) de l'enveloppe de protection (90) est reliée au circuit d'air chaud (7) par des brides coopérantes (22, 23) ;
- la rondelle élastique (16) et le rétrécissement (21) se trouvent au niveau de la bride (22) solidaire de l'extrémité arrière (90R) de l'enveloppe de protection (90) ; et
- ladite surface conique de guidage (24) est portée par la bride (23) solidaire dudit circuit d'air chaud (7).

10. Système de dégivrage selon l'une quelconque des revendications 1 à 9,
**caractérisé en ce que** ledit palier de coulissement (15) permet un mouvement de nutation limité pour ladite enveloppe de protection.

## Claims

1. A system for deicing the leading edge (1) of a nose inlet cowl (2) for a turbine engine, in particular for an aircraft, said leading edge (1) being hollow and defining an annular chamber (4) closed by a first internal bulkhead (5), and said deicing system comprising:
- a pressurized hot air supply duct (60) designed to be connected, at its rear end (60R) opposed to said leading edge (1), to a pressurized hot air circuit (7) and, at its front end (60A) toward the leading edge (1), to an injector (8) injecting said pressurized hot air into said annular chamber (4) of the leading edge, said supply duct passing through a compartment (10) of said nose inlet cowl (2) that is defined, at the front, by said first internal bulkhead (5) and, at the rear, by a second internal bulkhead (11); and
- an internal protective envelope (90) arranged in said compartment (10) and defining an isolation volume (12) enclosing said supply duct,
**characterized in that**:
- said supply duct (60) and said protective envelope (90) are longitudinally rigid;
- on one side, said supply duct (60) and said protective envelope (90) are rigidly fastened to one of said bulkheads; and
- on the other side:
• said protective envelope (90) is able to slide relative to a sliding bearing (15) provided in the other bulkhead; and
• said supply duct (60) is connected to said protective envelope (90) by an elastic wall (16) which closes off said isolation volume (12) and allows relative longitudinal movements between said supply duct (60) and said protective envelope (90).

2. The deicing system as claimed in claim 1, **characterized in that** said sliding bearing (15) is arranged in said first internal bulkhead (5).

3. The deicing system as claimed in claim 1, **characterized in that** said sliding bearing (15) is arranged in said second internal bulkhead (11).

4. The deicing system as claimed in one of claims 1 to 3, **characterized in that** said elastic wall (16) is formed by a spring washer arranged in an at least approximately orthogonal manner with respect to said supply duct (60) and to said protective envelope (90).

5. The deicing system as claimed in claim 4, **characterized in that** said washer has concentric corrugations (20).

6. The deicing system as claimed in either of claims 4 and 5, **characterized in that** said spring washer consists of a spring steel and is welded to said supply duct (60) and to said protective envelope (90) along its internal and external peripheries, respectively.

7. The deicing system as claimed in one of claims 4 to 6, **characterized in that** said spring washer is arranged at the location of a narrowing (21) of said supply duct (60).

8. The deicing system as claimed in claim 7, **characterized in that** there is provided a conical guide surface (24), upstream of said spring washer, so as to cause said pressurized hot air to converge toward said narrowing (21) of said supply duct (60).

9. The deicing system as claimed in claim 3 and either of claims 7 and 8, **characterized in that**:
- the rear end (90R) of the protective envelope (90) is connected to the hot air circuit (7) by co-acting flanges (22, 23);
- the spring washer (16) and the narrowing (21) are situated level with the flange (22) integrally connected to the rear end (90R) of the protective envelope (90); and
- said conical guide surface (24) is borne by the flange (23) integrally connected to said hot air circuit (7).

10. The deicing system as claimed in any one of claims 1 to 9, **characterized in that** said sliding bearing (15) allows said protective envelope to perform a limited nutation movement.

## Patentansprüche

1. System zur Enteisung der Anströmkante (1) einer Einlasshaube (2) eines Triebwerks, insbesondere für ein Flugzeug, wobei die Anströmkante (1) hohl ist und eine von einer ersten Innentrennwand (5) abgeschlossene Ringkammer (4) begrenzt und das Enteisungssystem Folgendes umfasst:
- eine Zuleitung (60) für heiße Druckluft, die an ihrem hinteren, der Anströmkante (1) gegenüberliegenden Ende (60R) an einen Heißdruckluftkreis (7) anschließbar ist und an ihrem vorderen, zur Anströmkante (1) gerichteten Ende (60A) an einen Injektor (8), der die heiße Druckluft in die Ringkammer (4) der Anströmkante einspritzt, wobei die Zuleitung durch einen Kasten (10) der Einlasshaube (2) hindurchtritt, der vorne durch die erste Innentrennwand (5) und hinten durch eine zweite Innentrennwand (11) begrenzt ist und
- eine innere Schutzumhüllung (90), die in dem Kasten (10) angeordnet ist und ein die Zuleitung umschließendes Isolationsvolumen (12) begrenzt,
**dadurch gekennzeichnet, dass**:
- die Zuleitung (60) und die Schutzumhüllung (90) in Längsrichtung starr sind,
- die Zuleitung (60) und die Schutzumhüllung (90) an einer Seite starr an einer der Trennwände befestigt sind und
- an der anderen Seite:
• die Schutzumhüllung (90) gegenüber einem in der anderen Trennwand vorgesehenen Schiebelager (15) verschiebbar ist und
• die Zuleitung (60) mit der Schutzumhüllung (90) durch eine elastische Wandung (16) verbunden ist, die das Isolationsvolumen (12) verschließt und Relativlängsbewegungen zwischen der Zuleitung (60) und der Schutzumhüllung (90) ermöglicht.

2. Enteisungssystem nach Anspruch 1,
**dadurch gekennzeichnet, dass** das Schiebelager (15) in der ersten Innentrennwand (5) angeordnet ist.

3. Enteisungssystem nach Anspruch 1,
**dadurch gekennzeichnet, dass** das Schiebelager (15) in der zweiten Innentrennwand (11) angeordnet ist.

4. Enteisungssystem nach einem der Ansprüche 1 bis 3,
**dadurch gekennzeichnet, dass** die elastische Wandung (16) durch eine bezogen auf die Zuleitung (60) und die Schutzumhüllung (90) annähernd orthogonal angeordnete Scheibe gebildet ist.

5. Enteisungssystem nach Anspruch 4,
**dadurch gekennzeichnet, dass** die Scheibe konzentrische Wellungen (20) aufweist.

6. Enteisungssystem nach Anspruch 4 oder 5,
**dadurch gekennzeichnet, dass** die elastische Scheibe aus einem Federstahl besteht und entlang ihres Innenumfangs und ihres Außenumfangs auf die Zuleitung (60) beziehungsweise auf die Schutzumhüllung (90) aufgeschweißt ist.

7. Enteisungssystem nach einem der Ansprüche 4 bis 6,
**dadurch gekennzeichnet, dass** die elastische Scheibe im Bereich einer Engstelle (21) der Zuleitung (60) angeordnet ist.

8. Enteisungssystem nach Anspruch 7,
**dadurch gekennzeichnet, dass** stromaufwärts der elastischen Scheibe eine konische Führungsfläche (24) vorgesehen ist, um die heiße Druckluft in Richtung auf die Engstelle (21) der Zuleitung (60) konvergieren zu lassen.

9. Enteisungssystem nach Anspruch 3 und einem der Ansprüche 7 oder 8,
**dadurch gekennzeichnet, dass**:
- das hintere Ende (90R) der Schutzumhüllung (90) durch zusammenwirkende Flansche (22, 23) mit dem Heißdruckluftkreis (7) verbunden ist,
- die elastische Scheibe (16) und die Engstelle (21) sich im Bereich des fest mit dem hinteren Ende (90R) der Schutzumhüllung (90) verbundenen Flansches (22) befinden und
- die konische Führungsfläche (24) von dem mit dem Heißdruckluftkreis (7) verbundenen Flansch (23) getragen ist.

10. Enteisungssystem nach einem der Ansprüche 1 bis 9,
**dadurch gekennzeichnet, dass** das Schiebelager (15) der Schutzumhüllung eine begrenzte Nutationsbewegung ermöglicht.
